# EUROPEAN PATENT APPLICATION

(11) **EP 3 598 271 A1**
(43) Date of publication of application: **22.01.2020**
(21) Application number: 18305968.2
(22) Date of filing: 17.07.2018
(51) Int. Cl.: G06F 3/01, G06F 3/0481

(54) **METHOD AND DEVICE FOR DISCONNECTING USER'S ATTENTION**

(71) Applicant: THOMSON LICENSING, 92130 Issy les Moulineaux (FR)
(72) Inventor: DRUGEON-HAMON, David, 35576 CESSON SEVIGNE (FR); LEYENDECKER, Philippe, 35576 CESSON SEVIGNE (FR); QUERRE, Goulven, 35576 CESSON SEVIGNE (FR)
(74) Representative: Huchet, Anne

(57) **Abstract**

A method and device for obtaining a video content. To reach that aim, at least a first part of said video content is obtained according to a field of view; a modified version of said at least a first part according to said field of view is obtained, the modified version being modified in at least an area of the at least a first part located at a periphery of the field of view; and a new content is obtained after the obtaining of the modified version, the new content being different from any content obtained in association with the at least a first part of the video content.

## Description

### 1. Technical field

The present document relates to the domain of image processing, especially for disconnecting the attention of a user consuming a video content, for instance with a head mounted displays (HMD) or a TV set or a mobile device such as a tablet or a smartphone.

### 2. Background

This section is intended to introduce the reader to various aspects of art, which may be related to various aspects that are described and/or claimed below. This discussion is believed to be helpful in providing the reader with background information to facilitate a better understanding of the present document. Accordingly, these statements are to be read in this light, and not as admissions of prior art.

An immersive content is made to be displayed around a user, so that the user has the feeling to be in the middle of the content. Immersive content may be a three-dimensional computer graphic imagery content (3D CGI), a volumetric video or a video mapped to a three-dimensional convex surface such as a sphere, a cube or a cylinder. Besides, a large two-dimension image of which the user could only see a part, by the means of a cropping for example, is also an immersive content. An immersive content may comprise several points of interest in different locations of the content at a same time.

A user watching a given point of interest may miss one or more other points of interest that the content creator whishes the user to see.

Forcing a virtual camera panning, in order to make the user see another point of interest, is an efficient solution. However, it is well known that this solution has the drawback to make most people sick and, as a consequence, to deteriorate the user's quality of experience when consuming a video content such as an immersive video content.

### 3. Summary

References in the document to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

According to one embodiment, a method of rendering a video content comprises:
- obtaining at least a first part of the video content according to a field of view;
- obtaining a modified version of the at least a first part according to the field of view, the modified version being modified in at least an area of the at least a first part located at a periphery of the field of view;
- obtaining a new content after the obtaining of the modified version, the new content being different from any content obtained in association with the at least a first part of the video content.

According to another embodiment, a device configured to obtain a video content comprises a memory associated with at least one processor configured to:
- obtain at least a first part of the video content according to a field of view;
- obtain a modified version of the at least a first part according to the field of view, the modified version being modified in at least an area of the at least a first part located at a periphery of the field of view;
- obtain a new content after the obtaining of the modified version, the new content being different from any content obtained in association with the at least a first part of the video content.

According to a further embodiment, a computer program product comprises program code instructions to execute the steps of the method of obtaining the video content, when this program is executed on a computer.

According to another embodiment, a (e.g., non-transitory) processor readable medium has stored therein instructions for causing a processor to perform the steps of the method of obtaining the video content.

### 4. List of figures

The present document will be better understood, and other specific features and advantages will emerge upon reading the following text, the document making reference to the annexed drawings wherein:
- Figure 1 shows an illustration of the human field of view, according to an example;
- Figure 2 shows a user consuming a panoramic content rendered by an immersive rendering device, according to a non-limiting embodiment;
- Figure 3 shows a planar representation of the panoramic content of figure 2, according to a non-limiting embodiment;
- Figure 4 shows an equirectangular mapping function associated with the panoramic content of figure 2, according to a non-limiting embodiment;
- Figure 5 shows a layout of the cube mapping function associated with the panoramic content of figure 2, according to a non-limiting embodiment;
- Figures 6A, 6B, 6C show operations applied to the panoramic content of figure 2, according to a non-limiting embodiment;
- Figures 7A, 7B, 7C show operations similar to the operations of figures 6A to 6C applied to a video content, according to a non-limiting embodiment;
- Figure 8 shows a method of obtaining a video content, such as the panoramic content of figure 2 or the video content of figures 7A to 7C, according to a non-limiting embodiment;
- Figure 9 shows an exemplary architecture of a device configured to implement the method of figure 8, according to a non-limiting embodiment.

### 5. Detailed description of embodiments

The subject matter is now described with reference to the drawings, wherein like reference numerals are used to refer to like elements throughout. In the following text, for purposes of explanation, numerous specific details are set forth in order to provide a thorough understanding of the subject matter. It can be evident, however, that subject matter embodiments can be practiced without these specific details.

According to non-restrictive embodiments, methods and devices to obtain a video content are disclosed. Methods and devices to display the obtained video content are also disclosed.

In the following, an image (also called a frame) contains one or several arrays of samples (pixel values) in a specific image/video format which specifies all information relative to the pixel values of an image and all information which may be used by a display and/or any other device to visualize and/or decode an image for example. An image comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

A video content corresponds to a sequence of temporally successive images (or frames), a determined time being associated with each image/frame of the video content. In a variant, a video content may comprise a single image/frame. Audio content and/or haptic content may be associated with the video content, the audio content and/or haptic content being synchronized with the video content.

A panoramic video content may be, among others, an immersive video representing a real scene for example, a three-dimension computer graphic imagery scene (3D CGI scene), a point cloud. Many terms might be used to design such panoramic videos contents: Virtual Reality (VR), 360, 4π steradians, immersive, omnidirectional or large field of view for example.

One or more embodiments of a method for (and an apparatus configured for) obtaining a video content are described. Obtaining a video content comprises receiving the video content and/or rendering the video content, according to the embodiment. At least a first part of the video content is obtained, the video content being according to a field of view. The first part corresponds to a part of the video content when the video content is a panoramic content, i.e. a video content that is larger than the field of view that is possible to be rendered/displayed on a display device (the display device having a limited field of view, e.g. 110°). When the video content is not a panoramic video content, the entire video content is obtained (the field of view of the video content corresponding to the field of view of the display device or is at least less than the field of view of the display device). A modified version of the obtained video content (or part of it) is obtained according to same field of view as the video content (or part of it), the modified version being obtained by modifying one or more areas of the video content (or part of it) located in the periphery of field of view. A new content is then obtained after the rendering of the modified version. The new content may for example correspond to another part (different from the first part) of the video content (e.g., when the video content is a panoramic video content), or the new content may be another video content different from the obtained video content, and/or an audio content that has not been obtained with the video content, and/or a haptic content that has not been obtained with the video content.

The obtaining of a modified version of the video content having a modified peripheral content in comparison to the original video content enables to naturally draw the attention of the user watching the video content without generating any abrupt disruption within the video content. Generating a subtle disruption of the attention of a user enables to propose a different content to the user without making the user sick because of an abrupt change of the rendered content.

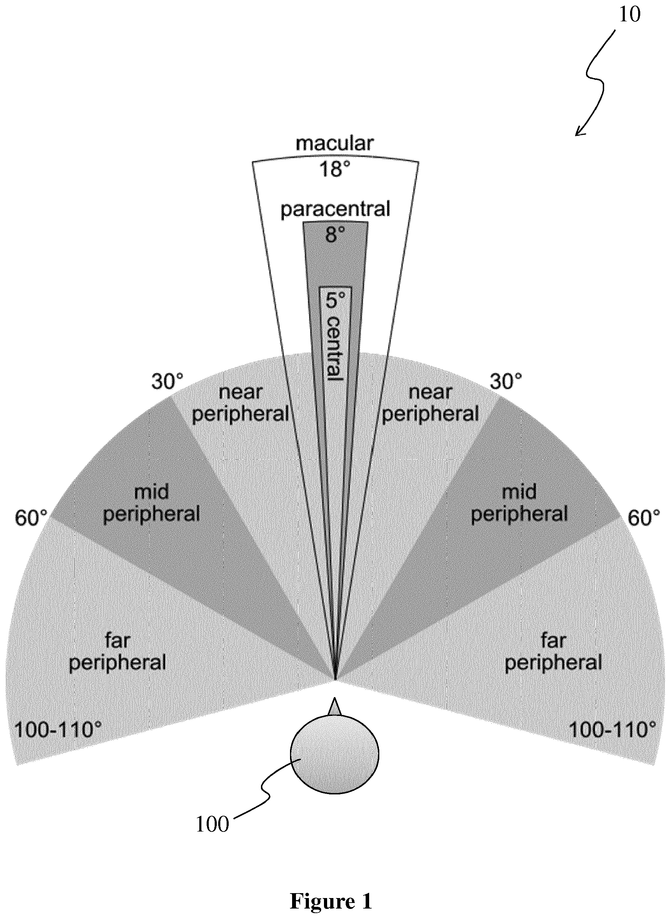

**Figure 1** shows an illustration of the human field of view, more specifically the horizontal field of view 10 of a user 100.

The human field of view comprises various parts, i.e. the central field of vision (including the central, paracentral, near peripheral and mid peripheral fields of vision) and the far peripheral field of vision. The central field of vision for most people covers an angle of between 50° and 60°. Within the central field of vision, both eyes may see an object simultaneously. The central field of vision is also called the 'binocular field' and within this field images are sharp, depth perception occurs, and colour discrimination is possible.

The far peripheral fields of vision are outside the range of binocular vision, only one eye seeing an object located in one of the far peripheral fields, either the right eye or the left eye. The left-hand side far peripheral field of vision (respectively the right-hand side far peripheral field of vision) is seen by the left-hand side eye (respectively the right-hand side eye) and covers a range of angles between 60° and 100-110° counter-clockwise direction (respectively clockwise direction).

The periphery of the horizontal field of view may be considered as comprising the mid peripheral and far peripheral fields of vision.

A similar distinction between central field of vision and far peripheral field of vision may be done for the vertical field of view of the user 100. The vertical central field of vision for most people covers an angle of about 50° (25° above the horizontal line of sight (0°) and 30° below the horizontal line of sight). The upper far peripheral field of vision covers a range of angles between 25° and 50° (counter-clockwise direction) and the lower far peripheral field of vision covers a range of angles between 30° and 70° (clockwise direction).

The periphery of the vertical field of view may be considered as comprising the vertical far peripheral fields of vision.

Visual acuity increases from movement discrimination in the peripheral vision (vision in the periphery of the field of view) to better than 10/10 in the central vision (central field of vision). Due to the repartition of receptors and ganglion cells in the retina of human eyes, peripheral vision is good at noticing flicker, detecting motion, detecting variation of contrast and/or detecting faint light sources at night, but peripheral vision is weak at distinguishing detail, color and shape of objects.

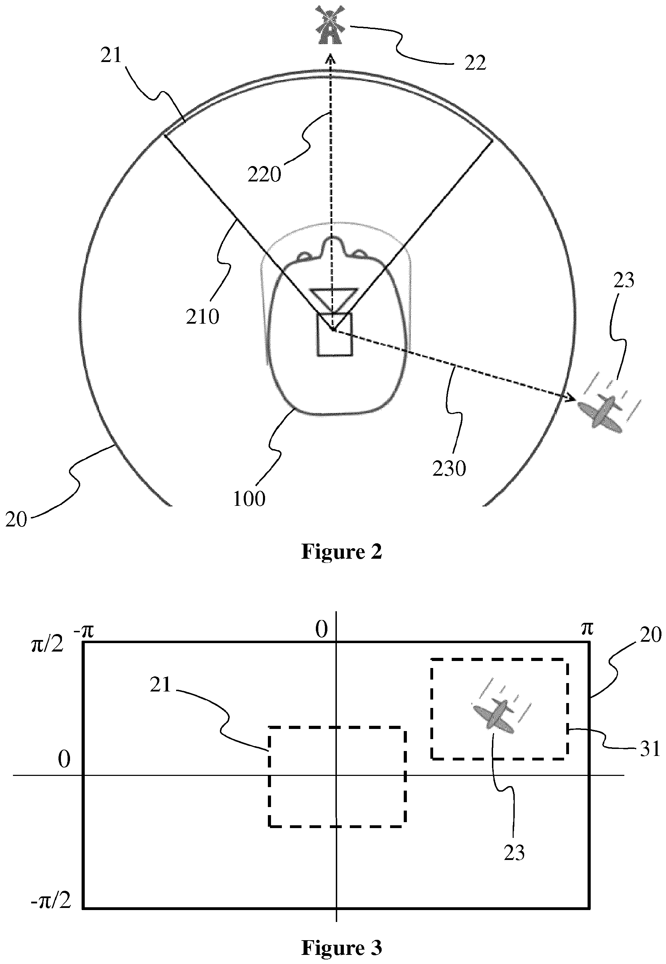

**Figure 2** shows a user 100 consuming a panoramic content 20, e.g. a 4π steradian video content (or spherical video content), rendered by a rendering device, according to a non-restrictive. The rendering device corresponds for example to an HMD (Head-Mounted Display) or a tablet or a smartphone.

The panoramic content 20 comprises for example several points of interest, namely a mill 22 and a plane 23, each point of interest 22 and 23 being located at various locations within the panoramic content 20. The panoramic content 20 corresponds for example to a real scene acquired with one or more cameras or to a virtual scene synthesized by using a 3D engine. According to a variant, the panoramic content 20 corresponds to a representation of a real scene including virtual object(s), i.e. a blending of real and virtual scenes. The panoramic content 20 corresponds for example to a real scene acquired with one or more cameras or to the combining / compositing of different elements of a real scene each acquired with one or more cameras.

The locations of the points of interest 22 and 23 may be for example defined with angular values, for example in a spherical coordinate system wherein the radial distance is constant (the location being defined with a polar angle and an azimuth angle).

The user 100 is watching at a first part 21 of the panoramic content 20 according to a viewing direction 220, the viewing direction 220 corresponding for example to the main direction of the gaze of the user 100. A field of view 210 is associated with the viewing direction 220, the field of view 210 corresponding to a first part only of the panoramic content 20. When the gaze direction of the user 100 changes, the part of the panoramic content seen by the user (and corresponding to the field of view) changes consequently. The user 100 may wander his/her gaze within the panoramic content 20 by for example moving his/her head (or his/her body or a part of it) from left to right (or inversely) and/or from top to bottom (or inversely), for example to watch at the point of interest 23 according to the viewing direction 230.

According to a variant, the viewing direction 220 and associated field of view 210 and associated first part 21 of the content are imposed to the user 100, for example by the content creator as a default content and associated viewing direction. According to this variant, the content creator may then impose the rendering of a second part of the panoramic content 20, the second part comprising the point of interest 23 and having the viewing direction 230 as main direction.

**Figure 3** shows the panoramic content 20, in the non-limiting exemplary form of a 4π steradian video content, according to a non-restrictive embodiment. Figure 3 corresponds to a planar representation of the panoramic content 20. The panoramic content 20 is for example centered on the first part 21 that comprises the point of interest 22, the first part 21 being rendered and/or displayed onto a rendering and/or display device adapted to visualize panoramic contents, the size of the first part 21 being for example equal to the field of view provided by the display device. The first part rendered and/or displayed on the rendering / display device may be called an image in the following description. The panoramic content may comprise a plurality of parts to be rendered / displayed, for example a second part 31 comprising the point of interest 23, the location of the first part 21 and of the second part 31 within the panoramic content 20 being different. The first part 21 and the second part 31 may have a same size corresponding to the field of view of the display device.

The display device used to visualize the panoramic content 20 is for example an HMD (Head-Mounted Display), worn on the head of a user or as part of a helmet. The HMD may comprise one or more display screens (for example LCD (Liquid Crystal Display), OLED (Organic Light-Emitting Diode) or LCOS (Liquid Crystal on Silicon)) and sensor(s) configured for measuring the change(s) of position of the HMD, for example gyroscopes or an IMU (Inertial Measurement Unit), according to one, two or three axes of the real world (pitch, yaw and/or roll axis). The first part 21 of the panoramic content 20 corresponding to the measured position of the HMD may be determined with a specific function establishing the relationship between the point of view associated with the HMD in the real world and the point of view of a virtual camera associated with the panoramic content 20. Controlling the part (i.e. the image) 21 or 31 of the video content to be displayed on the display screen(s) of the HMD according to the measured position of the HMD enables a user wearing the HMD to browse into the panoramic content 20, which is larger than the field of view associated with the display screen(s) of the HMD. For example, if the field of view offered by the HMD is equal to 110° (for example about the yaw axis) and if the panoramic content offers a content of 180°, the user wearing the HMD may rotate his/her head to the right or to the left to see the parts of the video content outside the field of view offered by the HMD. According to another example, the rendering / display device is a tablet or a smartphone with a tactile display screen, the user browsing into the content by moving the tablet/smartphone, the displayed content changing according to the change of position of the tablet/smartphone. According to another embodiment, the user 100 cannot browse into the panoramic content, the rendering of various parts 21, 31 of the panoramic content 20 being imposed to the user or according to a determined order.

The panoramic content 20 may comprise real objects and virtual objects, i.e. the scene represented by the panoramic content 20 may be an augmented-reality scene mixing real and virtual elements. The real objects are part of a real scene that is acquired with an image acquisition device (e.g. a camera) and the virtual objects may be obtained from computer-generated imagery (CGI).

The panoramic content 20 may comprise foreground object(s) and background object(s). The background object(s) may be obtained for example from a first video representing the background of the panoramic content 20. The foreground object(s) may be obtained for example from one or more second videos each representing one or more of the foreground objects, the panoramic content being obtained by compositing of the first video with the second video(s).

According to another example, the panoramic content rendered and/or displayed on the display device is obtained by overlaying one or more virtual objects that belongs to an immersive content on an image of a real scene that is for example acquired in real time with the camera of the display device. According to this example, the display device may be a tablet, the image of the real scene onto which is overlaid one or more virtual objects being acquired with the rear camera of the tablet. The image acquired with the rear camera is displayed on the screen of the tablet and a part of the panoramic content is overlaid on or composited with the image to obtain an augmented reality (AR) image. A user holding the tablet may acquire several images of the real scene according to several points of view, virtual objects of the immersive content being added to the images according to the points of view of these images of the real scene.

According to a further example, the panoramic content rendered and/or displayed on the display device is obtained by mixing a panoramic virtual content (also called large field-of-view CGI content) with images of a real scene acquired with a camera The pose of the camera used to acquire the images of the real scene is for example used to determine the corresponding pose of the virtual camera, to select a part of the panoramic virtual content scene corresponding to the image of the real scene to generate the augmented reality (or augmented virtuality) panoramic content.

In some of the abovementioned examples, the panoramic rendered and/or displayed on the display device is obtained by mixing part(s) of a panoramic content with one or more images acquired with a standard camera, i.e. not immersive images.

Naturally, the panoramic content 20 is not limited to a 4π steradian video content but extends to any video content (or audio-visual content) having a size greater than the field of view 210. The panoramic content may be for example a 2π, 2.5 π, 3π steradian content and so on.

It is understood with a video or a video content a sequence of successive still images, the sequence comprising one or more still image(s). The panoramic content may consequently comprise one or more successive image(s).

A panoramic video is a video encoded on at least one rectangular image that is a two-dimension array of pixels (i.e. element of color information) like a "regular" video. To be rendered, the image is first mapped on the inner face of a convex volume, also called mapping surface (e.g. a sphere, a cube, a pyramid), and, second, a part of this volume is captured by a virtual camera. Images captured by the virtual camera are rendered on the screen of an immersive display device (e.g., an HMD). A stereoscopic video is encoded on one or two rectangular images, projected on two mapping surfaces which are combined to be captured by two virtual cameras according to the characteristics of the device. Pixels are encoded according to a mapping function in the image. The mapping function depends on the mapping surface. For a same mapping surface, several mapping functions may be possible. For example, the faces of a cube may be structured according to different layouts within the image surface. A sphere may be mapped according to an equirectangular projection or to a gnomonic projection for example.

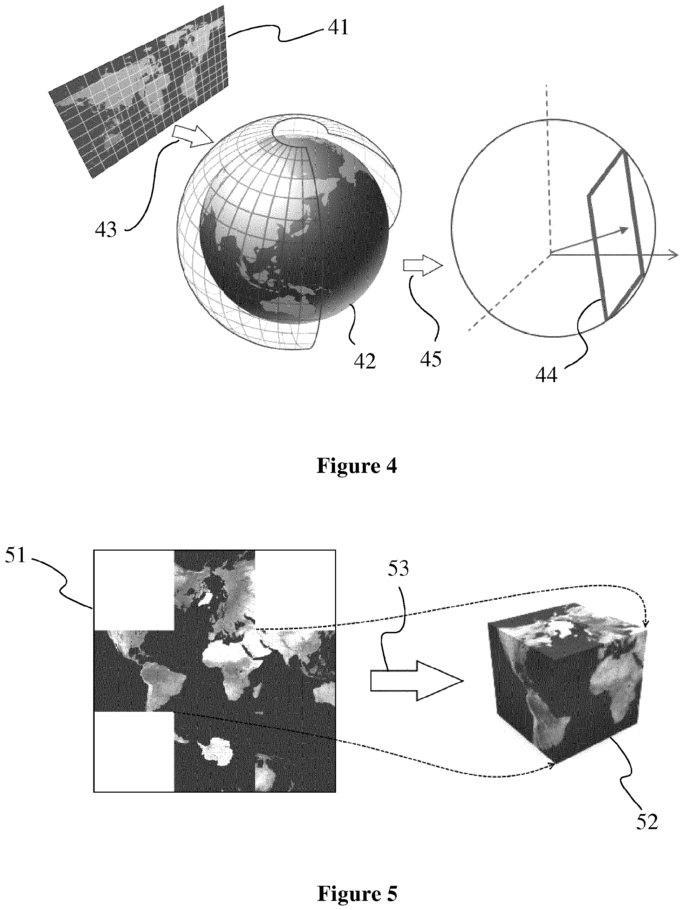

Figures 4 and 5 provide non-limiting examples of such mapping functions.

**Figure 4** shows an example of an equirectangular mapping function. The sequence of image(s) of a panoramic content is encoded on a rectangular image 41 meant to be mapped on a spherical mapping surface 42. The mapping function 43 establishes a mapping between each pixel of the image 41 and a point on the mapping surface 42 (and vice versa). On figure 4, the mapping function 43 is based on the equirectangular projection (also called equidistant cylindrical projection). The image on the image 41 is distorted. The distances are respected at the equator and stretched at poles. Straight lines are no longer straight, and perspectives are distorted. In variants, the mapping function 43 is based on the equidistant conic projection for instance. If the screen 44 is rectangular, as for head-mounted display devices (HMD) or tablets or smartphones, a part of the mapping surface 42 is selected. The projection function 45 consists in selecting a part of the mapping surface 42 as seen by a camera located at the center of the sphere, the camera being configured in terms of field of view and resolution in order to produce an image that directly fits with the screen 44. The chosen field of view depends on the characteristics of the immersive display device. For HMD for example, the angle of the field of view is close to the human stereoscopic vision field, which is around one hundred and twenty degrees. The aiming direction of the camera corresponds to the direction the user is looking toward, and the virtual camera controller of the immersive video rendering device is used to modify the aiming direction of the camera. In a variant, the video of figure 4 is stereoscopic. In such a variant, the image 41 contains two distinct images which are mapped on two distinct mapping surfaces 42. The mapping surfaces are combined according to the type of the screen to render the stereoscopic effect.

**Figure 5** shows an example layout of the cube mapping function. The sequence of images is encoded on a rectangular (or square) image 51 meant to be mapped on a cubical mapping surface 52. The mapping function 53 establishes a correspondence between squares in the image 51 and faces of the cube 52. Vice versa, the mapping function determines how the faces of the cube 52 are organized within the surface of the image 51. Images on each face are not distorted. However, in the total image of the image 51, lines are piece-wise straight, and perspectives are broken. The image may contain empty squares (filled with default or random color information, white on the example of figure 5). The projection function works as the projection function of figure 4. A camera is placed at the center of the cube 52 and captures an image that fits the screen of the immersive rendering device.

In variants, other mapping surfaces and/or mapping functions are used, mapping the video image on a cylinder or on a pyramid for instance.

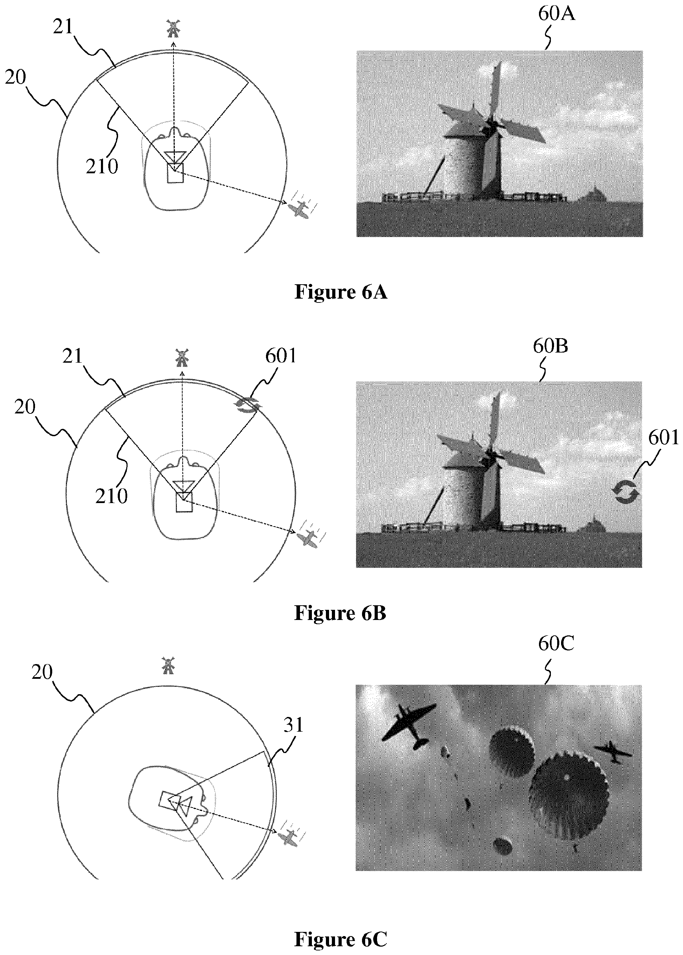

**Figures 6A, 6B, 6C** show operations applied to the panoramic content of figure 2, according to a non-restrictive embodiment.

Figure 6A shows the obtaining of the first part 21 of a video content, i.e. the panoramic content 20 according to this non-restrictive embodiment, the first part being according to the field of view 210. The result of the obtaining is an image 60A that comprises the point of interest 22, i.e. a mill.

The obtaining may correspond to receiving data representative of the first part, for example RGB data. The data may be received by a display device adapted to display the first part (i.e. the image 60A), for example received from a data stream or from a storage device such as a memory device. According to a variant, the data may be received by a decoder adapted to decode the data representative of the first part, the data being for example comprised in a bitstream received by the decoder or from a storage device.

The obtaining may correspond to rendering and/or displaying the first part 21 according to the field of view 210, for example by a rendering device and/or a display device.

Figure 6B shows the obtaining of a modified version of the first part 21 of the video content 20 according to the field of view 210. The result of the obtaining is an image 60B, the content of which being modified in comparison to the image 60A. The field of view of the images 60A and 60B is the same for both images. The image 60B is different from the image 60A in that the video content of an area 601 located in the periphery of the field of view 210 is modified in the image 60B in comparison with the image 60A. The modifying of the content of the area 601 is one of the following content modifications, or a combination of a plurality of the following content modifications:
- change of the luminance, i.e. the original level of luminance (i.e. the one of the area 601 in the image 60A) is modified to a target level of luminance; the target level of luminance may be a default system value or a user-defined value; according to a variant, the target level depends from the original level: for example, if the original content is dark (original level of luminance below a first given value) then the target level is such that the area 601 becomes hell and inversely, if the original content is hell (original level of luminance above a second given value) then the target level is such that the area 601 becomes dark;
- addition of a moving object, i.e. a graphical object moving over several consecutive frames in the area 601 ;
- applying of one or more filters to the area 601, for example to obtain a flickering effect in the area 601, and/or pixelization of the area 601, and/or a pixel-whirl (or pixel-storm).

The modified version may be received with the modifications already added to the peripheral area. According to a variant, the modified version is obtained by applying the modification to the original content of the first part by the device adapted to render and/or display the first part (i.e. the image 60A) and its modified version (i.e. the image 60B). The modification(s) may be obtained in real time. The data stream transporting the data representative of the content may comprise a timestamp, the timestamp providing to the rendering / display device the time information, at which the modification is to be applied to the first part. The timestamp may for example be added by the content creator or by a broadcaster providing the content. According to this variant, the data stream may further comprise information representative of the location of the modification(s) to be applied to the first part 21 and/or information representative of the type of modification(s) to be applied to the first part 21.

Modifying the peripheral content of the first part 21 enables to attract user's attention as peripheral vision is processed in a particular way by the human brain, with a high priority as it activates the reptilian-part of the brain (paleo-cortex). Attracting user's attention enables to briefly disconnect user's attention from the point of interest of the first part 21 in a natural way to prepare the user to a change of the point of interest (for example from the mill to the plane).

According to a variant embodiment, several areas of the first part located in the periphery of the field of view are modified to attract user's attention.

Figure 6C shows the obtaining of a new content, i.e. a content different from the contents previously rendered, after the obtaining of the modified version of the first part. According to the embodiment of figures 6A to 6C, the new content corresponds to the second part 31 of the panoramic content 20, which comprises the point of interest corresponding to the plane. The result of the rendering of the second part 31 is an image 60C that comprises the plane.

According to a variant embodiment, the new content is one of the following contents, or a combination of a plurality of the following contents:
- a video content different from the video content previously rendered and/or displayed;
- an audio content different from the audio content(s) previously rendered, for example different from the audio content rendered in synchronization with the rendering of the first part;
- a haptic content (e.g., an odor, a vibration, the displacement of an actuator associated with a part of the body of the user) different from the haptic content(s) previously rendered, for example different from the haptic content rendered in synchronization with the rendering of the first part.

The obtaining may correspond to receiving data representative of the new content. The data may be received by a device adapted to render / display the new content, for example received from a data stream or from a storage device such as a memory device. According to a variant, the data may be received by a decoder adapted to decode the data representative of the new content, the data being for example comprised in a bitstream received by the decoder or from a storage device.

The obtaining may correspond to rendering and/or displaying the new content, for example by a rendering device and/or a display device.

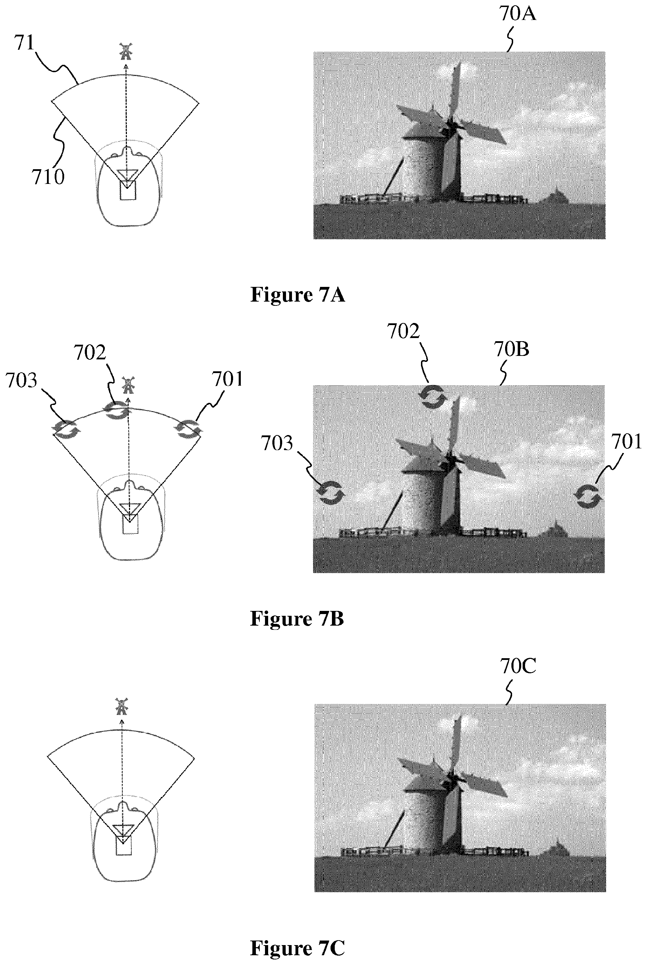

**Figures 7A, 7B, 7C** show operations applied to a video content, according to a further non-restrictive embodiment. The video content of figures 7A to 7C has a size or an associated field of view that is adapted for a display on a display device such as a television, a tablet, a smartphone, an HMD without cropping the content. In contrast to the panoramic content 20 (for which only a part of the content can be displayed at a time on a display device), the video content is fully rendered and/or displayed on the display device.

Figure 7A shows the obtaining of the video content 71 according to the field of view 710. The result of the obtaining is an image 70A that comprises the point of interest corresponding to the mill. The obtaining of Figure 7A is identical to the obtaining of Figure 6A, only the obtained content varying between Figure 6A (a part of a panoramic content) and Figure 7A (the whole content is obtained).

Figure 7B shows the obtaining of a modified version of the video content 71 according to the field of view 710. The result of the obtaining is an image 70B, the content of which being modified in comparison to the image 70A. The field of view of the images 70A and 70B is the same for both images. The image 70B is different from the image 70A in that the video contents of the areas 701, 702 and 703 located in the periphery (namely in the right-hand part, left-hand part and top part of the periphery) of the field of view 710 is modified in the image 70B in comparison with the image 70A. The modifying of the content of the areas 701 to 703 is one of the following content modifications, or a combination of a plurality of the following content modifications:
- change of the luminance, i.e. the original level of luminance (i.e. the one of the areas 701 to 703 in the image 70A) is modified to a target level of luminance; the target level of luminance may be a default system value or a user-defined value; according to a variant, the target level depends from the original level: for example, if the original content is dark (original level of luminance below a first given value) then the target level is such that the areas 701 to 703 becomes hell and inversely, if the original content is hell (original level of luminance above a second given value) then the target level is such that the areas 701 to 703 becomes dark;
- addition of a moving object, i.e. a graphical object moving over several consecutive frames in the areas 701 to 703;
- applying of one or more filters to the areas 701 to 703, for example to obtain a flickering effect in the areas 701 to 703, and/or pixelization of the areas 701 to 703, and/or a pixel-whirl (or pixel-storm).

The modification applied to the video content of the areas 701 to 703 may vary from an area 701 to another area 702 or 703 or may be the same for all areas 701 to 703. According to a variant, only one area 703 is modified.

The modified version may be received with the modifications already added to the peripheral area(s), for example in a preprocessing stage implemented by for example the content creator or the broadcaster providing the content. According to a variant, the modified version is obtained by applying the modification to the original content of the first part by the device adapted to render and/or display the first part (i.e. the image 70A) and its modified version (i.e. the image 70B). The modification(s) may be obtained in real time. The data stream transporting the data representative of the content may comprise a timestamp, the timestamp providing to the rendering / display device the time information, at which the modification is to be applied to the first part. The timestamp may for example be added by the content creator or by a broadcaster providing the content. According to this variant, the data stream may further comprise information representative of the location of the modification(s) to be applied to the video content 71 and/or information representative of the type of modification(s) to be applied to the video content 71.

Modifying the peripheral content of the video content 71 enables to attract user's attention as peripheral vision is processed in a particular way by the human brain, with a high priority as it activates the reptilian-part of the brain (paleo-cortex). Attracting user's attention enables to briefly disconnect user's attention from the point of interest of the first part 71 in a natural way to prepare the user to a change of the point of interest (for example from the mill to the plane).

Figure 7C shows the obtaining of a new content, i.e. a content different from the contents previously obtained, after the obtaining of the modified version of the video content. According to the embodiment of figures 7A to 7C, the new content corresponds for example to an audio content different from the audio content rendered with the video content 71. The image 70C obtained with the new content (e.g., in synchronization with the new content) is the same as the image 70A.

According to a variant embodiment, the new content is one of the following contents, or a combination of a plurality of the following contents:
- a video content different from the video content previously rendered and/or displayed;
- an audio content different from the audio content(s) previously rendered, for example different from the audio content rendered in synchronization with the rendering of the first part;
- a haptic content (e.g., an odor, a vibration, the displacement of an actuator associated with a part of the body of the user) different from the haptic content(s) previously rendered, for example different from the haptic content rendered in synchronization with the rendering of the first part.

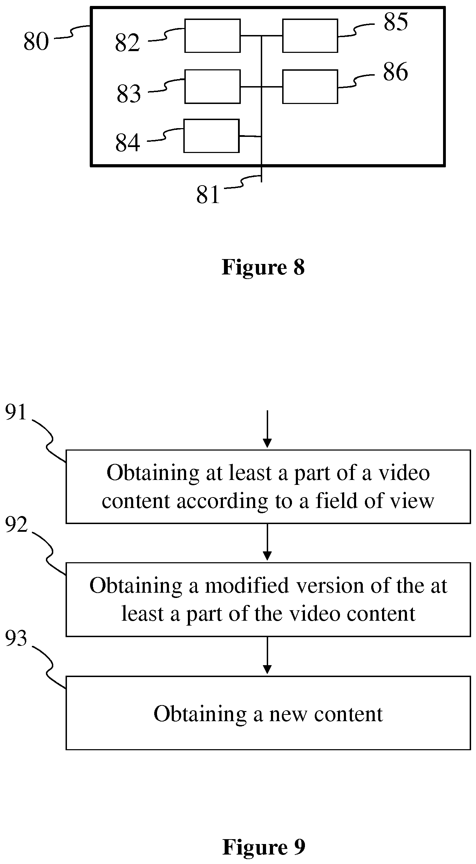

**Figure 8** shows an example of an architecture of an apparatus 80 for implementing at least a part of the operations described with regard to the figures 6A to6C, 7A to 7C and/or 9.

The apparatus 80 comprises following elements that are linked together by a data and address bus 81 :
- a microprocessor 82 (or CPU), which is, for example, a DSP (or Digital Signal Processor);
- a ROM (or Read Only Memory) 83;
- a RAM (or Random-Access Memory) 84;
- a storage interface 85; and
- an I/O interface 86 for reception of data to transmit, from an application.

The apparatus further comprises a power supply, e.g. a battery. In accordance with a variant embodiment, the power supply is external to the device. In each of mentioned memory, the word « register » used in the specification can correspond to area of small capacity (some bits) or to very large area (e.g. a whole program or large amount of received or decoded data). The ROM 83 comprises at least a program and parameters. The ROM 83 may store algorithms and instructions to perform techniques in accordance with present embodiments. When switched on, the CPU 82 uploads the program in the RAM and executes the corresponding instructions.

The RAM 84 comprises, in a register, the program executed by the CPU 82 and uploaded after switching on of the apparatus 8, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a variant, the apparatus 8 may further comprise one or more GPUs (Graphical Processor Units), in addition to the CPU or in replacement of the CPU. Graphical Random-Access Memory (GRAM) may be associated with the GPUs.

The apparatus 8 may further comprise a display device of display screen type directly connected to a graphics card (not shown) to display notably the at least a part of the video content and its modified version. The at least a part of the video content and its modified version may for example be composed or rendered in the graphics card, for example live. According to a variant, the at least a part of the video content and its modified version may for example be rendered in another device and received from this device by the apparatus 8 for display. The use of a dedicated bus to connect the display device to the graphics card offers the advantage of having much greater data transmission bitrates and thus reducing the latency time for the displaying of images composed by the graphics card.

According to a variant, a display device is external to the apparatus 8 and is connected to the apparatus 8 by a cable transmitting the display signals. According to this variant, the apparatus 8 is configured to for example decode and/or render the contents. The apparatus 8, for example the graphics card, comprises a means for transmission or connection (not shown) adapted to transmit a display signal to an external display means such as for example an LCD or plasma screen or a video-projector.

In accordance with examples, the apparatus 8 is configured to implement one or more of the methods described in relation with figures 6A-6C, 7A-7C and 9, and belongs to a set comprising:
- a mobile device;
- a communication device;
- a game device;
- a set top box;
- a TV set;
- a tablet (or tablet computer);
- a laptop; and
- a display (such as an HMD for example).

**Figure 9** shows a method of obtaining a video content, according to a non-restrictive embodiment. The method may for example be implemented in the apparatus 8.

In a step 91, at least a first part of a video content is obtained, the at least a first part being according to a field of view.

For example, if the video content is a panoramic video content, a first part of the panoramic video content is obtained according to the field of view. The field of view is for example the field of view of a display device used to display the first part of the panoramic video content. The first part may for example be received as such (i.e. in a state that enables to display it directly), for example from a decoder or a server. According to a variant, the first part may be rendered, for example rendered from data representative of the video content (for example encoded into a bitstream). The rendering may for example comprise decoding the encoded data and/or compositing the content. The first part that is obtained is for example a default first part (for example determined by the content creator, the broadcaster or the user) or the first part is obtained according to the viewing direction of the user holding the display device (the viewing direction may for example be determined by an IMU (Inertial Measurement Unit) or by an external tracking system, e.g. a gaze tracking system).

If the video content is a non-panoramic video content, i.e. a classical video content, the video content in its entirety is obtained, i.e. retrieved or received as such from a storage unit for example or rendered from data representative of the video content (for example encoded into a bitstream). According to a variant, even if the video content is a classical content, a first part of the video content may be obtained (e.g. by cropping), for example if the display device used to display the content has a screen size (or field of view) much lower than the size (or field of view) of the content (e.g. the display device is a smartphone).

In a step 92, a modified version of the first part of the video content or of the video content is obtained, the modified version being according to the same field of view as the original version (i.e. the first part or the video content before the modification). To obtain the modified version, one or more areas of the first part (or of the whole video content) are modified, the one or more areas being located in the periphery of the first part (respectively the video content). The periphery of the video content corresponds to the zone of the video content located in the peripheral field of vision of a user watching at the video content, as explained in relation with figure 1. The one or more modified areas are modified with regard to the original version by changing at least a part of their video content, for example by applying one or a combination of several modifications of the following modifications:
- change of the luminance, i.e. the original level of luminance is modified to a target level of luminance; the target level of luminance may be a default system value or a user-defined value; according to a variant, the target level depends from the original level: for example, if the original content is dark (original level of luminance below a first given value) then the target level is such that the areas becomes lighter and inversely, if the original content is hell (original level of luminance above a second given value) then the target level is such that the areas becomes darker;
- addition of a moving object, i.e. a graphical object moving over several consecutive frames in the one or more areas;
- applying of one or more filters to the one or more areas, for example to obtain a flickering effect in the one or more areas, and/or pixelization of the one or more areas, and/or a pixel-whirl (or pixel-storm).

In a step 93, a new content is obtained after the obtaining of the modified version of the at least a first part of the video content. The new content is new in that it is different from any content obtained in the previous steps. The new content may be for example one of the following contents, or a combination of a plurality of the following contents:
- a video content different from the video content previously obtained (i.e. received and/or rendered and/or displayed);
- an audio content different from the audio content(s) previously rendered, for example different from the audio content rendered in synchronization with the rendering of the first part;
- a haptic content (e.g., an odor, a vibration, the displacement of an actuator associated with a part of the body of the user) different from the haptic content(s) previously rendered, for example different from the haptic content rendered in synchronization with the rendering of the first part.

The steps 91 to 93 may be reiterated for successive video contents (for example for different frames of a same video sequence or for different video contents).

Naturally, the present document is not limited to the embodiments previously described.

The described embodiments are not limited to a method of obtaining a video content but also extends to a method and device for receiving a video content, and/or a method and device for rendering a video content and/or a method and device for displaying a video content, for example:
A method of receiving a video content (and the device configured to implement the method), the method comprising:
   - receiving at least a first part of said video content according to a field of view;
   - receiving a modified version of said at least a first part according to said field of view, said modified version being modified in at least an area of said at least a first part located at a periphery of said field of view;
   - receiving a new content after the receiving of said modified version, said new content being different from any content received in association with said at least a first part of said video content.

A method of rendering a video content (and the device configured to implement the method), the method comprising:
- rendering at least a first part of said video content according to a field of view;
- rendering a modified version of said at least a first part according to said field of view, said modified version being modified in at least an area of said at least a first part located at a periphery of said field of view;
- rendering a new content after the rendering of said modified version, said new content being different from any content rendered in association with said at least a first part of said video content.

A method of displaying a video content (and the device configured to implement the method), the method comprising:
- displaying at least a first part of said video content according to a field of view;
- displaying a modified version of said at least a first part according to said field of view, said modified version being modified in at least an area of said at least a first part located at a periphery of said field of view;
- displaying a new content after the receiving of said modified version, said new content being different from any content displayed in association with said at least a first part of said video content.

The device configured to implement the abovementioned methods may be a device comprising means for performing the steps of the method(s); a device comprising a memory and one or more processor configured to implement the steps of the method(s); or a device comprising a receiver for receiving, and/or a renderer for rendering and/or a display screen for displaying.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, a HMD (Head-Mounted Display), smart glasses and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of obtaining a video content, comprising:
- obtaining at least a first part of said video content according to a field of view;
- obtaining a modified version of said at least a first part according to said field of view, said modified version being modified in at least an area of said at least a first part located at a periphery of said field of view;
- obtaining a new content after the obtaining of said modified version, said new content being different from any content obtained in association with said at least a first part of said video content.

2. The method according to claim 1, wherein the new content corresponds to a second part of said video content, said second part being different from said at least a first part.

3. The method according to one of claims 1 and 2, wherein the new content corresponds to an audio content different from an audio content associated with said at least a first part of said video content.

4. The method according to one of claims 1 to 3, wherein the new content corresponds to a haptic content different from a haptic content associated with said at least a first part of said video content.

5. The method according to one of claims 1 to 4, wherein a luminance component of said at least an area is modified to obtain said modified version.

6. The method according to one of claims 1 to 5, wherein a moving object is added in said at least an area to obtain said modified version.

7. A device configured to obtain a video content, the device comprising a memory associated with at least one processor configured to:
- obtain at least a first part of said video content according to a field of view;
- obtain a modified version of said at least a first part according to said field of view, said modified version being modified in at least an area of said at least a first part located at a periphery of said field of view;
- obtain a new content after the obtaining of said modified version, said new content being different from any content obtained in association with said at least a first part of said video content.

8. The device according to claim 7, wherein the new content corresponds to a second part of said video content, said second part being different from said at least a first part.

9. The device according to one of claims 7 and 8, wherein the new content corresponds to an audio content different from an audio content associated with said at least a first part of said video content.

10. The device according to one of claims 7 to 9, wherein the new content corresponds to a haptic content different from a haptic content associated with said at least a first part of said video content.

11. The device according to one of claims 7 to 10, wherein a luminance component of said at least an area is modified to obtain said modified version.

12. The device according to one of claims 7 to 11, wherein a moving object is added in said at least an area to obtain said modified version.

13. A computer program product comprising program code instructions to execute the steps of the method according to one of claims 1 to 6, when this program is executed on a computer.

14. A processor readable medium having stored therein instructions for causing a processor to perform the steps of the method according to one of claims 1 to 6.
